# EUROPEAN PATENT APPLICATION

(11) **EP 4 550 740 A1**
(43) Date of publication of application: **07.05.2025**
(21) Application number: 24210228.3
(22) Date of filing: 31.10.2024
(51) Int. Cl.: H04L 41/0654, H04L 41/0677, H04L 41/0853, H04L 41/0873, H04L 43/0817

(54) **PORT MISCONFIGURATION DETECTION**

(30) Priority: 31.10.2023 IN 202341074133; 29.10.2024 US 202418930642
(71) Applicant: Juniper Networks, Inc., Sunnyvale, CA 94089-1206 (US)
(72) Inventor: SHAMSUNDAR, Abhiram Madhugiri, Sunnyvale, 94089 (US); WANG, Wenfeng, Sunnyvale, 94089 (US); PALLAVI, Priti, Sunnyvale, 94089 (US); MEHTA, Ruchit Rajkumar, Sunnyvale, 94089 (US); SHIL, Rajdeep, Sunnyvale, 94089 (US)
(74) Representative: D Young & Co LLP

(57) **Abstract**

Techniques are described for determining port misconfiguration between network devices. For example, a network management system comprises a memory and one or more processors in communication with the memory and configured to: obtain information associated with one or more ports of a plurality of network devices; determine, based on information associated with a port of a first network device of the plurality of network devices and information associated with a port of a second network device of the plurality of network devices that is connected to the port of the first network device, whether there is a port misconfiguration of the first network device or the second network device; and perform, based on the determination that there is a port misconfiguration of the first network device or the second network device, an action to remedy the port misconfiguration of the first network device or the second network device.

## Description

This application claims the benefit of US Patent Application No. 18/930,642, filed 29 October 2024, which claims the benefit of IN Provisional Patent Application No. 202341074133, filed 31 October 2023, the entire contents of which is incorporated herein by reference.

### TECHNICAL FIELD

This disclosure generally relates to computer networks and, more specifically, monitoring and/or managing network performance in computer networks.

### BACKGROUND

Commercial premises or sites, such as offices, hospitals, airports, stadiums, or retail outlets, often install complex wireless network systems, including a network of wireless access points (APs), throughout the premises to provide wireless network services to one or more wireless client devices (or simply, "clients"). APs are physical, electronic devices that enable other devices to wirelessly connect to a wired network using various wireless networking protocols and technologies, such as wireless local area networking protocols conforming to one or more of the IEEE 802.11 standards (i.e., "Wi-Fi"), Bluetooth / Bluetooth Low Energy (BLE), mesh networking protocols such as ZigBee or other wireless networking technologies. Many different types of wireless client devices, such as laptop computers, smartphones, tablets, wearable devices, appliances, and Internet of Things (IoT) devices, incorporate wireless communication technology and can be configured to connect to wireless access points when the device is in range of a compatible wireless access point in order to access a wired network.

### SUMMARY

Particular aspects are set out in the appended independent claims. Various optional embodiments are set out in the dependent claims. In general, this disclosure describes techniques for the determination and remediation of port misconfiguration between connected network devices. A network device (e.g., switch) may include one or more ports to connect to another network device. For example, a port of a switch may connect to a port of another switch, an AP device, a gateway, and/or other type of network device. The misconfiguration of at least one port of the connected network devices may cause issues with client devices accessing the network via the network devices. In accordance with the techniques described in this disclosure, a computing device, e.g., a network management system (NMS), may determine port misconfiguration between connected network devices based on port information of the connected network devices and may, in some examples, automatically perform an action to remedy the port misconfiguration.

For example, network devices may utilize discovery protocols, such as Link Layer Discovery Protocol (LLDP), to advertise information to connected peers, such as device identity information, device configuration information, device connection information, etc. The information advertised by connected peers may include information associated with ports of connected network devices, such as virtual local area network (VLAN) identifiers, maximum transmission units (MTUs), data speed, modes, power status, duplex configurations, etc. (collectively referred to herein as "port information"). The NMS obtains port information of connected network devices, and determines, based on the port information of the connected network devices, whether there is a port misconfiguration of at least one of the connected network devices. In some examples, the NMS may combine port information of the connected network devices (e.g., by performing a cross join of tables including port information associated with the connected network devices) and may identify mismatched and/or missing values of the port information of the connected network devices, which may be indicative of a misconfiguration of a port of at least one of the connected network devices. In some examples, the NMS may determine whether the differences in values of the port information of the connected network devices is appropriate based on a particular hierarchical relationship between the connected network devices, such as determining that the values of the port information (e.g., number of VLANs) between a parent device and a child device are not appropriate for the parent-child relationship, which may be indicative of a port misconfiguration. Based on the determination of the port misconfiguration of at least one of the connected network devices, the NMS performs an action, such as sending a notification indicative of the port misconfiguration of the network device and/or automatically performing a corrective action (e.g., reset the network device, invoke downloading of new software for the network device, adding a missing VLAN, removing an unnecessary VLAN, reconfiguring a VLAN, etc.).

The techniques of this disclosure provide one or more technical advantages and practical applications. For example, by obtaining port information of connected network devices, the techniques in this disclosure may automatically determine and/or remediate port misconfigurations, which may reduce downtime to the network caused by the port misconfigurations.

The details of one or more examples of the techniques of this disclosure are set forth in the accompanying drawings and the description below. Other features, objects, and advantages of the techniques will be apparent from the description and drawings, and from the claims.

### BRIEF DESCRIPTION OF DRAWINGS

FIG. 1A is a block diagram illustrating an example network system, in accordance with one or more techniques of the disclosure.
FIG. 1B is a block diagram illustrating further details of the example network system of FIG. 1A, in accordance with one or more techniques of the disclosure.
FIG. 2 is a block diagram of an example access point device in accordance with one or more techniques of the disclosure.
FIG. 3A is a block diagram of an example network management system configured to detect port misconfiguration, in accordance with one or more techniques of the disclosure.
FIG. 3B is a block diagram illustrating further details of a port misconfiguration detection engine of the network management system of FIG. 3A.
FIG 4 is a block diagram of an example network node, in accordance with one or more techniques of this disclosure.
FIGS. 5A-5B illustrate an example operation of detecting port misconfiguration, in accordance with the techniques described in this disclosure.
FIG. 6 is a flowchart illustrating an example operation of a network management system configured to detect port misconfiguration, in accordance with one or more techniques of this disclosure.

### DETAILED DESCRIPTION

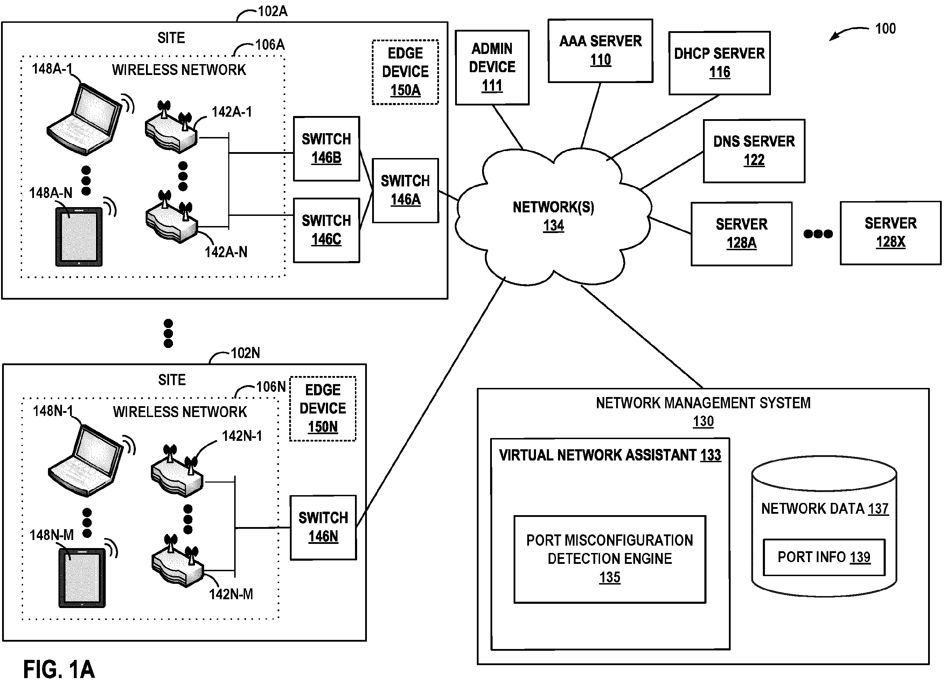

FIG. 1A is a block diagram illustrating an example network system 100 including network management system (NMS) 130 configured to detect and/or remedy port misconfiguration, in accordance with one or more techniques of the disclosure. Example network system 100 includes a plurality of sites 102A-102N (collectively, "sites 102") at which a network service provider manages one or more wireless networks 106A-106N (collectively, "wireless networks 106"), respectively. Although in FIG. 1A each of sites 102 is shown as including a single wireless network 106A-106N, respectively, in some examples, each of sites 102 may include multiple wireless networks, and the disclosure is not limited in this respect.

Each of sites 102A-102N includes a plurality of network access server (NAS) devices, such as access points (APs) 142, switches 146, or routers (not shown). For example, site 102A includes a plurality of APs 142A-1 through 142A-N. Similarly, site 102N includes a plurality of APs 142N-1 through 142N-M. Each AP 142 may be any type of wireless access point, including, but not limited to, a commercial or organization AP, a wireless router, or any other device that is connected to a wired network and is capable of providing wireless network access to client devices within the site. References to "N" or "M" may represent any number. References to "N" for different elements need not be the same number. Similarly, references to "M" for different elements need not be the same number.

Each of sites 102A-102N also includes a plurality of client devices, otherwise known as user equipment devices (UEs), referred to generally as UEs or client devices 148, representing various wireless-enabled devices within each site. For example, a plurality of UEs 148A-1 through 148A-N are currently located at site 102A. Similarly, a plurality of UEs 148N-1 through 148N-M are currently located at site 102N. Each UE 148 may be any type of wireless client device, including, but not limited to, a mobile device such as a smart phone, tablet or laptop computer, a personal digital assistant (PDA), a wireless terminal, a smart watch, smart ring, or other wearable device. UEs 148 may also include wired client-side devices, e.g., IoT devices such as printers, security devices, environmental sensors, or any other device connected to the wired network and configured to communicate over one or more wireless networks 106.

In order to provide wireless network services to UEs 148 and/or communicate over the wireless networks 106, APs 142 and the other wired client-side devices at sites 102 are connected, either directly or indirectly, to one or more network devices (e.g., switches, routers, or the like) via physical cables, e.g., Ethernet cables. In the example of FIG. 1A, site 102A includes a mesh or partial mesh topology in a hub- and-spoke architecture in which client-side devices of site 102A may be connected to two or more switches and/or routers. For example, site 102A includes APs 142A-1 through 142A-N at site 102A connected to top-of-rack (TOR) switches, e.g., switches 146B and 146C, respectively, and each of TOR switches 146B and 146C connected to a chassis switch, e.g., switch 146A. Switches 146A, 146B, and 146C may provide, for example, UEs 148 with redundant (multi-homed) connectivity to one or more network(s) 134, e.g., the Internet and/or an enterprise intranet. Site 102N includes a switch 146N to which each of APs 142N-1 through 142 N-M at site 102N are connected. FIG. 1A is merely an example. Each of sites 102 may include one or more switches that are connected to access points and/or other switches. In some examples, interconnected switches and routers comprise wired local area networks (LANs) at sites 102 hosting wireless networks 106.

Example network system 100 also includes various networking components for providing networking services within the wired network including, as examples, an Authentication, Authorization and Accounting (AAA) server 110 for authenticating users and/or UEs 148, a Dynamic Host Configuration Protocol (DHCP) server 116 for dynamically assigning network addresses (e.g., IP addresses) to UEs 148 upon authentication, a Domain Name System (DNS) server 122 for resolving domain names into network addresses, a plurality of servers 128A-128X (collectively "servers 128") (e.g., web servers, databases servers, file servers and the like), and a network management system (NMS) 130. As shown in FIG. 1A, the various devices and systems of network 100 are coupled together via one or more network(s) 134, e.g., the Internet and/or an enterprise intranet.

In the example of FIG. 1A, NMS 130 is a cloud-based computing platform that manages wireless networks 106A-106N at one or more of sites 102A-102N. As further described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. In some examples, NMS 130 outputs notifications, such as alerts, alarms, graphical indicators on dashboards, log messages, text / SMS messages, email messages, and the like, and/or recommendations regarding wireless network issues to a site or network administrator ("admin") interacting with and/or operating admin device 111. Additionally, in some examples, NMS 130 operates in response to configuration input received from the administrator interacting with and/or operating admin device 111.

Admin device 111 may comprise a computing device of an IT personnel and/or administrator associated with one or more of sites 102. Admin device 111 may be implemented as any suitable device for presenting output and/or accepting user input. For instance, admin device 111 may include a display. Admin device 111 may be a computing system, such as a mobile or non-mobile computing device operated by a user and/or by the administrator. Admin device 111 may, for example, represent a workstation, a laptop or notebook computer, a desktop computer, a tablet computer, or any other computing device that may be operated by a user and/or present a user interface in accordance with one or more aspects of the present disclosure. Admin device 111 may be physically separate from and/or in a different location than NMS 130 such that admin device 111 may communicate with NMS 130 via network 134 or other means of communication.

In some examples, one or more of the NAS devices, e.g., APs 142, switches 146, or routers, may connect to edge devices 150A-150N via physical cables, e.g., Ethernet cables. Edge devices 150 comprise cloud-managed, wireless local area network (LAN) controllers. Each of edge devices 150 may comprise an on-premises device at a site 102 that is in communication with NMS 130 to extend certain microservices from NMS 130 to the on-premises NAS devices while using NMS 130 and its distributed software architecture for scalable and resilient operations, management, troubleshooting, and analytics.

Each one of the network devices of network system 100, e.g., servers 110, 116, 122 and/or 128, APs 142, UEs 148, switches 146, and any other servers or devices attached to or forming part of network system 100, may include a system log or an error log module wherein each one of these network devices records the status of the network device including normal operational status and/or error conditions. Throughout this disclosure, one or more of the network devices of network system 100 may be considered "third-party" network devices when owned by and/or associated with a different entity than NMS 130 such that NMS 130 does not receive, collect, or otherwise have access to the recorded status and other data of the third-party network devices. In some examples, edge devices 150 may provide a proxy through which the recorded status and other data of the third-party network devices may be reported to NMS 130.

In operation, NMS 130 observes, collects, and/or receives network data 137, which may take the form of data extracted from messages, counters, and statistics, for example. In accordance with one specific implementation, a computing device is part of NMS 130. In accordance with other implementations, NMS 130 may comprise one or more computing devices, dedicated servers, virtual machines, containers, services, or other forms of environments for performing the techniques described herein. Similarly, computational resources and components implementing VNA 133 may be part of the NMS 130, may execute on other servers or execution environments, or may be distributed to nodes within network 134 (e.g., routers, switches, controllers, gateways, and the like).

In some examples, NMS 130 monitors network data 137 received from wireless networks 106A-106N at each site 102A-102N, respectively, and manages network resources, such as NAS devices at each site, to deliver a high-quality wireless experience to end users, IoT devices, and clients at the site. For example, NMS 130 may include a virtual network assistant (VNA) 133 that implements an event processing platform for providing real-time insights and simplified troubleshooting for IT operations, and that automatically takes corrective action or provides recommendations to proactively address wireless network issues. VNA 133 may, for example, include an event processing platform configured to process hundreds or thousands of concurrent streams of network data 137 from sensors and/or agents associated with NAS devices (e.g., APs 142, switches 146, etc.) and/or nodes within network 134. For example, VNA 133 of NMS 130 may include an underlying analytics and network error identification engine and alerting system in accordance with various examples described herein. The underlying analytics engine of VNA 133 may apply historical data and models to the inbound event streams to compute assertions, such as identified anomalies or predicted occurrences of events constituting network error conditions. Further, VNA 133 may provide real-time alerting and reporting to notify a site or network administrator via admin device 111 of any predicted events, anomalies, trends, and may perform root cause analysis and automated or assisted error remediation. In some examples, VNA 133 of NMS 130 may apply machine learning techniques to identify the root cause of error conditions detected or predicted from the streams of network data 137. If the root cause may be automatically resolved, VNA 133 may invoke one or more corrective actions to correct the root cause of the error condition, thus automatically improving the underlying SLE metrics and also automatically improving the user experience.

Further example details of operations implemented by the VNA 133 of NMS 130 are described in U.S. Patent No. 9,832,082, issued November 28, 2017, and entitled "Monitoring Wireless Access Point Events," U.S. Publication No. US 2021/0306201, published September 30, 2021, and entitled "Network System Fault Resolution Using a Machine Learning Model," U.S. Patent No. 10,985,969, issued April 20, 2021, and entitled "Systems and Methods for a Virtual Network Assistant," U.S. Patent No. 10,958,585, issued March 23, 2021, and entitled "Methods and Apparatus for Facilitating Fault Detection and/or Predictive Fault Detection," U.S. Patent No. 10,958,537, issued March 23, 2021, and entitled "Method for Spatio-Temporal Modeling," and U.S. Patent No. 10,862,742, issued December 8, 2020, and entitled "Method for Conveying AP Error Codes Over BLE Advertisements," all of which are incorporated herein by reference in their entirety.

Each of switches 146 within network system 100 may include one or more ports configured to connect to other network devices. For instance, a port of a switch, e.g., switch 146A, may connect to a port of another switch, e.g., switch 146B (referred to as a "switch-to-switch connection"). In another instance, a port of switch 146A may connect to a port of a gateway (referred to as a "switch-to-gateway connection"). In another instance, a port of switch 146B may alternatively, or additionally, connect to a port of an AP device, e.g., AP 142A-1 (referred to as a "switch-to-AP connection"). In any of the above instances, one or more ports of connected network devices at a site may be misconfigured, which may cause issues for end users, IoT devices, and/or client devices at the site to access the network via the network devices.

In accordance with the techniques described in this disclosure, network management system 130 may include a port misconfiguration detection engine 135 configured to obtain port information of connected network devices and determine, based on the port information of the connected network devices, whether there is a misconfiguration of a port of at least one network device of the connected network devices, such as a misconfiguration of any of the ports connecting switches, a misconfiguration of any of the ports connecting a switch and an AP, and/or a misconfiguration of any of the ports connecting a switch and another device.

In the example of FIG. 1A, switches 146 may each determine neighboring devices directly connected to the switch. For example, switches 146 may use Link Layer Discovery Protocol (LLDP), or other neighbor discovery protocol, to advertise device information to directly connected peers. For example, the device information may include an organization identifier of an organization including the network device ("org_id"), a site identifier of a site including the network device ("site _id"), a MAC address of the network device, a name of the network device, a remote chassis identifier ("remote_chassis_id"), a port identifier of a port of a connected network device ("remote_port_id"), a vendor of the connected network device ("remote_vendor"), a link connecting the port of the network device to another network device ("link"), one or more VLAN identifiers associated with a port of the network device ("vlan_ids"), one or more VLAN identifiers associated with a port of the connected network device ("remote_vlan_id"), data transfer and/or reception speed of the port of the network device ("Mbps"), maximum transmission unit size of the network device ("mtu"), power-over-Ethernet status of the port of the network device ("poe_status"), mode of the port of the network device such as access mode or trunk mode ("mode"), spanning tree protocol (STP) state of the port of the network device ("stp_state"), duplex configuration of the port of the network device ("full_duplex"), and/or other information associated with ports of connected network devices. The above device information may be referred to herein as "port information" and may include any information associated with ports of connected devices that may be used to identify a port misconfiguration of the connected network devices.

In the example of FIG. 1A, NMS 130 may obtain port information of connected network devices. For example, NMS 130 may obtain port information associated with a port of switch 146A that is connected to a port of switch 146B and port information associated with the port of switch 146B that is connected to the port of switch 146A. NMS 130 may also obtain port information associated with a port of switch 146B that is connected to a port of AP 142A-1 and port information associated with the port of AP 142A-1 that is connected to the port of switch 146B. NMS 130 may additionally obtain port information associated with a port of switch 146A that is connected to a port of a gateway device (not shown) and port information associated with the port of the gateway device.

In some examples, NMS 130 may obtain, or switches 146 and/or APs 142 may each send, port information 139 periodically, intermittently, and/or based on one or more events (e.g., memory status, reboot or restart events, crash events, cloud disconnect events, link flapping events, Ethernet port status changes, Ethernet interface packet errors, upgrade failure events, firmware upgrade events, configuration changes, etc.). In other examples, NMS 130 may obtain port information 139 of switches 146 and/or APs 142 within a particular site or organization (e.g., site 102A). NMS 130 may store the port information in a database or data store, represented as port information 139 of network data 137 in FIG. 1A. In some examples, NMS 130 may store port information 139 in a graph database (e.g., arangoDB), where edge nodes of the graph may store port information of a parent-child hierarchy of the connected network devices.

Port misconfiguration detection engine 135 of NMS 130 may determine, based on port information 139, whether there is a misconfiguration of ports of connecting devices. As further described below, port misconfiguration detection engine 135 of NMS 130 may determine whether there is a misconfiguration of ports of connecting switches or a misconfiguration of ports of a switch connected to a gateway device. In these examples, NMS 130 may combine port information of each of the connected network devices (e.g., perform a cross join of tables including port information associated with connected network devices), and may identify differences in values of one or more parameters (also referred to herein as "mismatched parameters") based on the combined port information of the connected network devices, which may be indicative of a misconfiguration of a port of at least one of the connected network devices. In this example, port misconfiguration detection engine 135 may combine port information associated with switch 146B and port information associated with switch 146A and determine whether there are differences in values of one or more parameters of the combined port information of switch 146A and switch 146B, such as a difference in values of VLAN identifiers, MTU, mode access, full duplex, PoE status, and/or any other information associated with the ports of switch 146A and switch 146B.

In some examples, port misconfiguration detection engine 135 of NMS 130 may determine whether the differences in values of one or more parameters is appropriate based on a particular hierarchical relationship between the connected network devices, such as when the mismatched parameters are not appropriate for connected network devices having a parent-child relationship, which may be indicative of port misconfiguration. For example, port misconfiguration detection engine 135 of NMS 130 may determine that switch 146A and switch 146B have mismatched parameters. In response, port misconfiguration detection engine 135 may determine a hierarchical relationship between switch 146A and switch 146B, such as determining that switch 146A is a parent switch and switch 146B is child switch. Based on the determined hierarchical relationship between switch 146A and switch 146B, port misconfiguration detection engine 135 may determine whether the mismatched parameters are appropriate for the parent-child relationship between switch 146A and switch 146B. For example, NMS 130 may determine whether a number of VLANs of switch 146A and a number of VLANs of switch 146B are appropriate given their hierarchical relationship. If the mismatched parameters of switch 146A and switch 146B are appropriate (e.g., child switch has a fewer number of VLANs than parent switch), port misconfiguration detection engine 135 may determine that there is no misconfiguration of the ports connecting switch 146A and switch 146B. If the mismatched parameters of switch 146A and switch 146B are not appropriate (e.g., child switch has a greater number of VLANs than parent switch), port misconfiguration detection engine 135 may determine that there is a misconfiguration of at least one of the ports connecting switch 146A and switch 146B.

Alternatively, or additionally, port misconfiguration detection engine 135 may determine, based on port information 139 of a switch-to-access point connection, e.g., switch 146B and AP 142A-1, whether there is a misconfiguration of ports connecting switch 146B and AP 142A-1. In this example, NMS 130 may obtain WLAN information (e.g., service set identifier (SSID)) identifying a WLAN, e.g., wireless network 106A, that UEs 148A-1 through 148A-N may access via AP 142A-1. As further described below, port misconfiguration detection engine 135 of NMS 130 may determine whether a VLAN mapped to the WLAN (referred to herein as "VLAN-WLAN mapping") configured on ports connecting AP 142A-1 and switch 146B is misconfigured. For example, if the VLAN associated with the port of switch 146B does not match the VLAN associated with the port of AP 142A-1, or that one or more VLANs are missing in the configuration of the ports, NMS 130 may determine that wireless network 106A has an issue due to a misconfiguration of the VLAN with at least one of the ports connecting switch 146B and AP 142A-1.

Based on a determination that there is a port misconfiguration for the connected network devices, NMS 130 may perform an action, such as to generate a notification of the detected port misconfiguration. For example, the notification may indicate a detected port misconfiguration and/or a reason for the port misconfiguration. In some examples, the notification may additionally, or alternatively, include a recommendation to remedy the port misconfiguration (e.g., recommendation to reconfigure a VLAN, add a missing VLAN, etc.). In some examples, NMS 130 may automatically perform a remedial action, such as to restart a network device determined to have a port misconfiguration, invoke downloading of new software to the network device, add a missing VLAN, reconfigure a VLAN, remove an unnecessary VLAN, or other action to remedy the port misconfiguration.

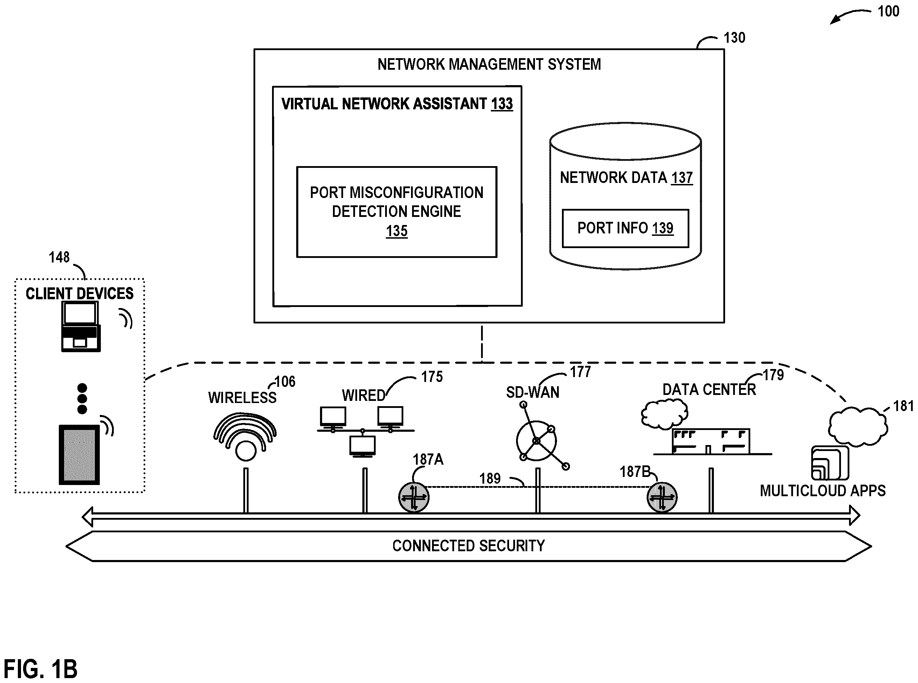

FIG. 1B is a block diagram illustrating further example details of the network system of FIG. 1A. In this example, FIG. 1B illustrates NMS 130 configured to operate according to an artificial intelligence / machine-learning-based computing platform providing comprehensive automation, insight, and assurance (WiFi Assurance, Wired Assurance and WAN assurance) spanning from "client," e.g., user devices 148 connected to wireless network 106 and wired LAN 175 (far left of FIG. 1B), to "cloud," e.g., cloud-based application services 181 that may be hosted by computing resources within data centers 179 (far right of FIG. 1B).

As described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. For example, network management system 130 may be configured to proactively monitor and adaptively configure network 100 so as to provide self-driving capabilities. Moreover, VNA 133 includes a natural language processing engine to provide AI-driven support and troubleshooting, anomaly detection, AI-driven location services, and AI-driven radio frequency (RF) optimization with reinforcement learning.

As illustrated in the example of FIG. 1B, AI-driven NMS 130 also provides configuration management, monitoring and automated oversight of software defined wide-area network (SD-WAN) 177, which operates as an intermediate network communicatively coupling wireless networks 106 and wired LANs 175 to data centers 179 and application services 181. In general, SD-WAN 177 provides seamless, secure, traffic-engineered connectivity between "spoke" routers 187A of wired networks 175 hosting wireless networks 106, such as branch or campus networks, to "hub" routers 187B further up the cloud stack toward cloud-based application services 181. SD-WAN 177 often operates and manages an overlay network on an underlying physical Wide-Area Network (WAN), which provides connectivity to geographically separate customer networks. In other words, SD-WAN 177 extends Software-Defined Networking (SDN) capabilities to a WAN and allows network(s) to decouple underlying physical network infrastructure from virtualized network infrastructure and applications such that the networks may be configured and managed in a flexible and scalable manner.

In some examples, underlying routers of SD-WAN 177 may implement a stateful, session-based routing scheme in which the routers 187A, 187B dynamically modify contents of original packet headers sourced by client devices 148 to steer traffic along selected paths, e.g., path 189, toward application services 181 without requiring use of tunnels and/or additional labels. In this way, routers 187A, 187B may be more efficient and scalable for large networks since the use of tunnel-less, session-based routing may enable routers 187A, 187B to achieve considerable network resources by obviating the need to perform encapsulation and decapsulation at tunnel endpoints. Moreover, in some examples, each router 187A, 187B may independently perform path selection and traffic engineering to control packet flows associated with each session without requiring use of a centralized SDN controller for path selection and label distribution. In some examples, routers 187A, 187B implement session-based routing as Secure Vector Routing (SVR), provided by Juniper Networks, Inc.

Additional information with respect to session-based routing and SVR is described in U.S. Patent No. 9,729,439, entitled "COMPUTER NETWORK PACKET FLOW CONTROLLER," and issued on August 8, 2017; U.S. Patent No. 9,729,682, entitled "NETWORK DEVICE AND METHOD FOR PROCESSING A SESSION USING A PACKET SIGNATURE," and issued on August 8, 2017; U.S. Patent No. 9,762,485, entitled "NETWORK PACKET FLOW CONTROLLER WITH EXTENDED SESSION MANAGEMENT," and issued on September 12, 2017; U.S. Patent No. 9,871,748, entitled "ROUTER WITH OPTIMIZED STATISTICAL FUNCTIONALITY," and issued on January 16, 2018; U.S. Patent No. 9,985,883, entitled "NAME-BASED ROUTING SYSTEM AND METHOD," and issued on May 29, 2018; U.S. Patent No. 10,200,264, entitled "LINK STATUS MONITORING BASED ON PACKET LOSS DETECTION," and issued on February 5, 2019; U.S. Patent No. 10,277,506, entitled "STATEFUL LOAD BALANCING IN A STATELESS NETWORK," and issued on April 30, 2019; U.S. Patent No. 10,432,522, entitled "NETWORK PACKET FLOW CONTROLLER WITH EXTENDED SESSION MANAGEMENT," and issued on October 1, 2019; and U.S. Patent No. 11,075,824, entitled "IN-LINE PERFORMANCE MONITORING," and issued on July 27, 2021, the entire content of each of which is incorporated herein by reference in its entirety.

In some examples, AI-driven NMS 130 may enable intent-based configuration and management of network system 100, including enabling construction, presentation, and execution of intent-driven workflows for configuring and managing devices associated with wireless networks 106, wired LAN networks 175, and /or SD-WAN 177. For example, declarative requirements express a desired configuration of network components without specifying an exact native device configuration and control flow. By utilizing declarative requirements, what should be accomplished may be specified rather than how it should be accomplished. Declarative requirements may be contrasted with imperative instructions that describe the exact device configuration syntax and control flow to achieve the configuration. By utilizing declarative requirements rather than imperative instructions, a user and/or user system is relieved of the burden of determining the exact device configurations required to achieve a desired result of the user/system. For example, it is often difficult and burdensome to specify and manage exact imperative instructions to configure each device of a network when various different types of devices from different vendors are utilized. The types and kinds of devices of the network may dynamically change as new devices are added and device failures occur. Managing various different types of devices from different vendors with different configuration protocols, syntax, and software versions to configure a cohesive network of devices is often difficult to achieve. Thus, by only requiring a user/system to specify declarative requirements that specify a desired result applicable across various different types of devices, management and configuration of the network devices becomes more efficient. Further example details and techniques of an intent-based network management system are described in U.S. Patent No. 10,756,983, entitled "Intent-based Analytics," and U.S. Patent No. 10,992,543, entitled "Automatically generating an intent-based network model of an existing computer network," each of which is hereby incorporated by reference.

In accordance with the techniques described in this disclosure, NMS 130 is configured to detect and/or remedy port misconfiguration, as further described in this disclosure. As described above, port misconfiguration detection engine 135 of NMS 130 is configured to obtain port information of connected network devices of wired network 175, such as port misconfiguration detection engine 135 of NMS 130 may obtain port information of connected switches (e.g., switch 146A and switch 146B in FIG. 1A), port information of a switch and access point that are connected (e.g., switch 146B and AP 142A-1 in FIG. 1A), port information of a switch and gateway that are connected, and/or other connected network devices in wired network 175 and/or SD-WAN 177.

Based on the port information of the connected network devices, port misconfiguration detection engine 135 may determine whether there is a port misconfiguration of the connected network devices. NMS 130 may perform an action based on a determination that there is a mismatched port configuration between the connected network devices, such as to generate a notification of the detected port misconfiguration and/or automatically perform a remedial action.

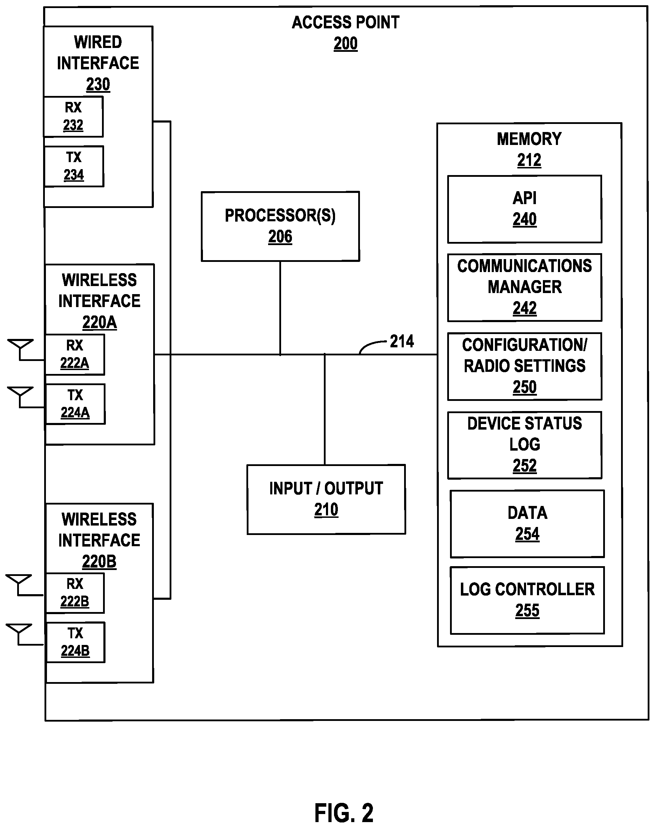

FIG. 2 is a block diagram of an example access point (AP) device 200, in accordance with one or more techniques of this disclosure. Example access point 200 shown in FIG. 2 may be used to implement any of APs 142 as shown and described herein with respect to FIG. 1A. Access point 200 may comprise, for example, a Wi-Fi, Bluetooth and/or Bluetooth Low Energy (BLE) base station or any other type of wireless access point.

In the example of FIG. 2, access point 200 includes a wired interface 230, wireless interfaces 220A-220B, one or more processor(s) 206, memory 212, and input/output 210, coupled together via a bus 214 over which the various elements may exchange data and information. Wired interface 230 represents a physical network interface and includes a receiver 232 and a transmitter 234 for sending and receiving network communications, e.g., packets. Wired interface 230 couples, either directly or indirectly, access point 200 to a wired network device, such as one of switches 146 of FIG. 1A, within the wired network via a cable, such as an Ethernet cable.

First and second wireless interfaces 220A and 220B represent wireless network interfaces and include receivers 222A and 222B, respectively, each including a receive antenna via which access point 200 may receive wireless signals from wireless communications devices, such as UEs 148 of FIG. 1A. First and second wireless interfaces 220A and 220B further include transmitters 224A and 224B, respectively, each including transmit antennas via which access point 200 may transmit wireless signals to wireless communications devices, such as UEs 148 of FIG. 1A. In some examples, first wireless interface 220A may include a Wi-Fi 802.11 interface (e.g., 2.4 GHz and/or 5 GHz) and second wireless interface 220B may include a Bluetooth interface and/or a Bluetooth Low Energy (BLE) interface.

Processor(s) 206 are programmable hardware-based processors configured to execute software instructions, such as those used to define a software or computer program, stored to a computer-readable storage medium (such as memory 212), such as computer-readable mediums including a storage device (e.g., a disk drive, or an optical drive) or a memory (such as Flash memory or RAM) or any other type of volatile or non-volatile memory, that stores instructions to cause the one or more processors 206 to perform the techniques described herein.

Memory 212 includes one or more devices configured to store programming modules and/or data associated with operation of access point 200. For example, memory 212 may include a computer-readable storage medium, such as computer-readable mediums including a storage device (e.g., a disk drive, or an optical drive) or a memory (such as Flash memory or RAM) or any other type of volatile or non-volatile memory, that stores instructions to cause the one or more processor(s) 206 to perform the techniques described herein.

In this example, memory 212 stores executable software including an application programming interface (API) 240, a communications manager 242, configuration settings 250, a device status log 252, data storage 254, and log controller 255. Device status log 252 includes a list of events specific to access point 200. The events may include a log of both normal events and/or error events such as, for example, memory status, reboot or restart events, crash events, cloud disconnect with self-recovery events, low link speed or link speed flapping events, Ethernet port status, Ethernet interface packet errors, upgrade failure events, firmware upgrade events, configuration changes, etc., as well as a time and date stamp for each event. Log controller 255 determines a logging level for the device based on instructions from NMS 130.

Input/output (I/O) 210 represents physical hardware components that enable interaction with a user, such as buttons, a display, and the like. Although not shown, memory 212 typically stores executable software for controlling a user interface with respect to input received via I/O 210. Communications manager 242 includes program code that, when executed by processor(s) 206, allow access point 200 to communicate with UEs 148 and/or network(s) 134 via any of interface(s) 230 and/or 220A-220C. Configuration settings 250 include any device settings for access point 200 such as radio settings for each of wireless interface(s) 220A-220C. These settings may be configured manually or may be remotely monitored and managed by NMS 130 to optimize wireless network performance on a periodic (e.g., hourly or daily) basis.

Data 254 may include information associated with AP device 200 and/or a device connected to AP device 200. For example, data 254 may include port information received from a switch (e.g., switch 146B of FIG. 1A) that is connected to AP device 200. The port information may include, for example, VLAN information associated with ports connected AP device 200 and the switch, such as one or more VLAN identifiers associated with a port of AP device 200 ("vlan_ids"), one or more VLAN identifiers associated with a port of the switch connected to AP device 200 ("remote_vlan_id"), and/or other information that AP device 200 may obtain from a device connected to AP device 200 via a discovery protocol (e.g., LLDP). In some examples, data 254 may include details about clients connected to AP device 200 and the associated client sessions. For example, data 254 may include WLAN information identifying a wireless network that one or more client devices may access via AP device 200, such as an SSID of the wireless network or other identifying information of the wireless network.

As described in this disclosure, AP device 200 may provide one or more client devices with access to a wireless network (i.e., WLAN). Each WLAN may be configured with one or more VLANs. A port of AP device 200 and a port of a switch connected to AP device 200 may be assigned to the one or more VLANs. In one instance, one or more client devices may experience an issue with a wireless network. In this example, a misconfiguration of a port configured for the one or more VLANs may be a cause of the issue with the wireless network.

In accordance with the techniques described in this disclosure, AP device 200 is configured to send information to a network management system (e.g., NMS 130 of FIG. 1A) with which the network management system may use to detect a port misconfiguration to at least one of the ports connecting AP device 200 and a switch, such as a misconfiguration of one or more VLANs assigned to the ports.

For example, AP device 200 may periodically create a package of the data according to a periodic interval (e.g., minutes, hours, days, etc.). The collected data that is periodically-reported in the package of the data may be referred to herein as "ap-stats." The data collected and reported by AP device 200 may include periodically-reported data and event-driven data. In some examples, the data collected and reported by AP device 200 may include port information of AP device 200 and/or port information of a network device (e.g., switch) connected to AP device 200. For example, AP device 200 and its neighboring devices may use LLDP, or other layer 2 neighbor discovery protocol, to advertise port information to directly connected peers. As described above, port information may include, for example, information specifying one or more VLANs associated with a wireless network that one or more client devices may access via AP device 200. In some examples, the package of data may also include details about clients connected to AP device 200 and the associated client sessions, such as WLAN information (e.g., SSID) identifying the wireless network that one or more client devices may access via AP device 200.

As described further below, the port misconfiguration detection engine 135 of NMS 130 may determine a VLAN mapped to the wireless network based on the WLAN information, and may further determine, based on the port information, whether the VLAN associated with the ports connecting AP device 200 and the switch is misconfigured.

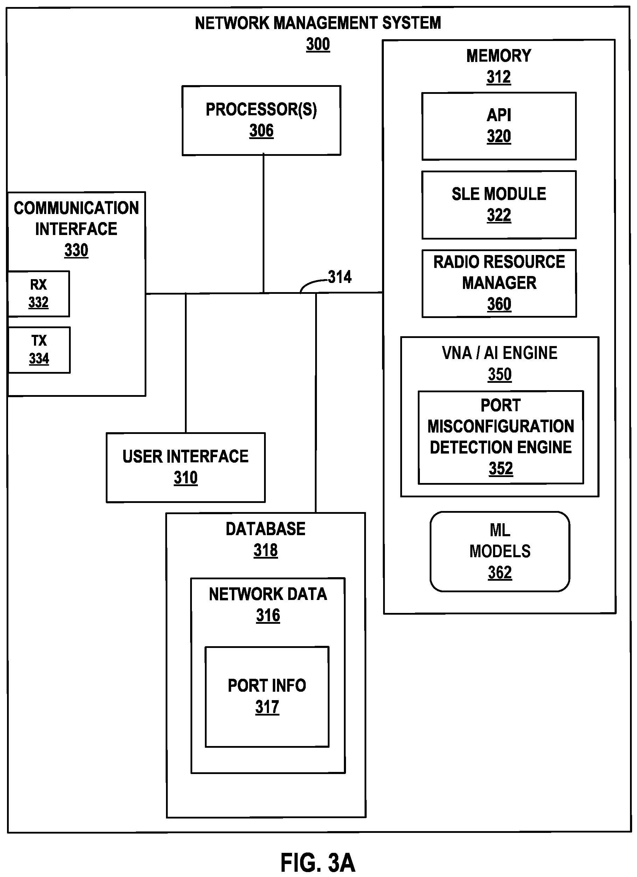

FIG. 3A is a block diagram of an example network management system (NMS) 300 configured to detect port misconfiguration, in accordance with one or more techniques of the disclosure. NMS 300 may be an example implementation of NMS 130 in FIGS. 1A-1B. In such examples, NMS 300 is responsible for monitoring and management of one or more wireless networks 106A-106N and/or wired networks at sites 102A-102N, respectively.

NMS 300 includes a communications interface 330, one or more processor(s) 306, a user interface 310, a memory 312, and a database 318. The various elements are coupled together via a bus 314 over which the various elements may exchange data and information. Processor(s) 306 execute software instructions, such as those used to define a software or computer program, stored to a computer-readable storage medium (such as memory 312), such as computer-readable mediums including a storage device (e.g., a disk drive, or an optical drive) or a memory (such as Flash memory or RAM) or any other type of volatile or non-volatile memory, that stores instructions to cause the one or more processors 306 to perform the techniques described herein.

Communications interface 330 may include, for example, an Ethernet interface. Communications interface 330 couples NMS 300 to a network and/or the Internet, such as any of network(s) 134 as shown in FIG. 1A, and/or any local area networks. Communications interface 330 includes a receiver 332 and a transmitter 334 by which NMS 300 receives/transmits data and information to/from any of client devices 148, APs 142, switches 146, servers 110, 116, 122, 128, and/or any other network nodes, devices, or systems forming part of network system 100 such as shown in FIG. 1A. In some scenarios described herein in which network system 100 includes "third-party" network devices that are owned and/or associated with different entities than NMS 300, network devices that are owned and/or associated with the same entity as NMS 300 may use LLDP to obtain data of connected network devices and sends the data of the third-party network devices to NMS 300 such that NMS 300 may receive, collect, or otherwise obtain network data from the third-party network devices.

In some examples, NMS 300 may receive data via communications interface 330 from one or more of client devices 148, APs 142, switches 146, and other network nodes within network 134, e.g., routers 187 of FIG. 1B, which may be used to remotely monitor the performance of wireless networks 106A-106N and/or wired networks (e.g., wired network 175 of FIG. 1B). For example, data received from one or more of client devices 148, APs 142, switches 146, and other network nodes within network 134 may include telemetry data, SLE-related data, and/or event data, and is stored in database 318, as network data 316. Network data 316 may additionally, or alternatively, include port information as described herein that may be used to detect a port misconfiguration of connected network devices. For example, NMS 300 may receive port information of the devices, such as port information obtained by the connected network devices via LLDP (e.g., VLAN identifiers, MTU, PoE status, mode, duplex configuration, etc.), and is stored in database 318, as port information 317. In some examples, database 318 may include a mapping of wireless networks and VLANs. For example, database 318 may include a mapping of one or more VLANs that are associated with a wireless network (e.g., wireless network 106A). In these examples, NMS 300 may receive WLAN information identifying a wireless network that one or more client devices may access via an AP device, and use the WLAN information to identify a VLAN mapped to the wireless network with which NMS 300 may use to detect a port misconfiguration of the VLAN.

NMS 300 may further transmit data via communications interface 330 to any of network devices such as client devices 148, APs 142, switches 146, other network nodes within network 134, and/or admin device 111 to remotely manage wireless networks 106A-106N and portions of the wired network.

Memory 312 includes one or more devices configured to store programming modules and/or data associated with operation of NMS 300. For example, memory 312 may include a computer-readable storage medium, such as a computer-readable medium including a storage device (e.g., a disk drive, or an optical drive) or a memory (such as Flash memory or RAM) or any other type of volatile or non-volatile memory, that stores instructions to cause the one or more processor(s) 306 to perform the techniques described herein.

In this example, memory 312 includes an API 320, an SLE module 322, a virtual network assistant (VNA)/AI engine 350, and a radio resource management (RRM) engine 360. NMS 300 may also include any other programmed modules, software engines and/or interfaces configured for remote monitoring and management of wireless networks 106A-106N and portions of the wired network, including remote monitoring and management of any of APs 142/200, switches 146, or other network devices, e.g., routers 187 of FIG. 1B.

SLE module 322 enables set up and tracking of thresholds for SLE metrics for each network 106A-106N. For example, SLE module 322 analyzes SLE-related data collected by APs, such as any of APs 142 from UEs in each wireless network 106A-106N. For example, APs 142A-1 through 142A-N collect SLE-related data from UEs 148A-1 through 148A-N currently connected to wireless network 106A. This data is transmitted to NMS 300, which executes by SLE module 322 to determine one or more SLE metrics for devices in wireless network 106A. In some examples, SLE module 322 enables set up and tracking of thresholds for SLE metrics for wired networks. For example, SLE module 322 analyzes SLE-related data collected by switches, APs, and/or other devices in a wired network. For example, switches 146A-146C may collect SLE-related data from APs 142A-1 through 142A-N currently connected to the wired network. This data is transmitted to NMS 300, which executes by SLE module 322 to determine one or more SLE metrics for devices in the wired network.

RRM engine 360 monitors one or more metrics for each site 102A-102N in order to learn and optimize the RF environment at each site. For example, RRM engine 360 may monitor the coverage and capacity SLE metrics for a wireless network 106 at a site 102 in order to identify potential issues with SLE coverage and/or capacity in the wireless network 106 and to make adjustments to the radio settings of the access points at each site to address the identified issues. For example, RRM engine may determine channel and transmit power distribution across all APs 142 in each network 106A-106N. For example, RRM engine 360 may monitor events, power, channel, bandwidth, and number of clients connected to each AP. RRM engine 360 may further automatically change or update configurations of one or more APs 142 at a site 102 with an aim to improve the coverage and capacity SLE metrics and thus to provide an improved wireless experience for the user.

VNA/AI engine 350 analyzes data received from network devices as well as its own data to identify when undesired to abnormal states are encountered at one of the network devices. For example, VNA/AI engine 350 may identify the root cause of any undesired or abnormal states, e.g., any poor SLE metric(s) indicative of connected issues at one or more network devices. In addition, VNA/AI engine 350 may automatically invoke one or more corrective actions intended to address the identified root cause(s) of one or more poor SLE metrics. Examples of corrective actions that may be automatically invoked by VNA/AI engine 350 may include, but are not limited to, invoking RRM 360 to reboot one or more APs, adjusting/modifying the transmit power of a specific radio in a specific AP, adding SSID configuration to a specific AP, changing channels on an AP or a set of APs, etc. The corrective actions may further include restarting a switch and/or a router, invoking downloading of new software to an AP, switch, or router, reconfiguring VLANs, etc. These corrective actions are given for example purposes only, and the disclosure is not limited in this respect. If automatic corrective actions are not available or do not adequately resolve the root cause, VNA/AI engine 350 may proactively provide a notification including recommended corrective actions to be taken by IT personnel, e.g., a site or network administrator using admin device 111, to address the network error.

In some examples, ML model 362 may comprise a supervised ML model that is trained, using training data comprising pre-collected, labeled network data received from network devices (e.g., client devices, APs, switches and/or other network nodes), to identify port misconfigurations. The supervised ML model may comprise one of a logistical regression, naive Bayesian, support vector machine (SVM), or the like. In other examples, ML model 362 may comprise an unsupervised ML model. Although not shown in FIG. 3A, in some examples, database 318 may store the training data and VNA/AI engine 350 or a dedicated training module may be configured to train ML model 362 based on the training data to determine appropriate weights across the one or more features of the training data.

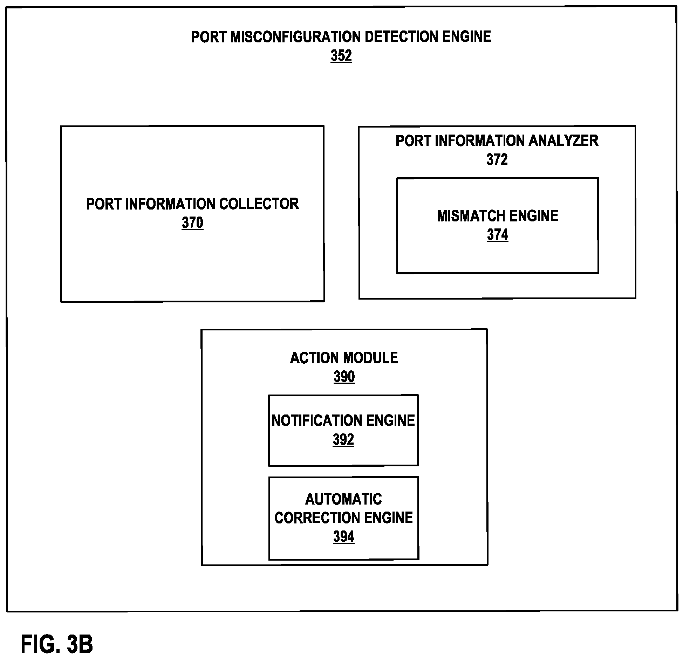

In accordance with one or more techniques of this disclosure, VNA 350 includes a port misconfiguration detection engine 352 configured to detect port misconfiguration between connected network devices, such as between connected switches, between a switch connected to a gateway device, and/or between a switch connected to an AP device, as further described below in FIG. 3B.

FIG. 3B is a block diagram illustrating further details of a port misconfiguration detection engine 352 of the network management system 300 of FIG. 3A. In the example of FIG. 3B, port misconfiguration detection engine 352 may represent an example implementation of port misconfiguration detection engine 135 of FIGS. 1A-1B. In this example, port misconfiguration detection engine 352 includes port information collector 370, port information analyzer 372, and action engine 390.

Port information collector 370 may obtain port information 317 of connected network devices (e.g., VLANs, MTU, mode, PoE status, duplex configuration, etc.) stored in database 318 and provides port information 317 to port information analyzer 372 to detect port misconfiguration based on port information 317 of connected network devices. In some examples, port information collector 370 may obtain WLAN information identifying a wireless network that one or more client devices may access via an access point, and may determine one or more VLANs mapped to a wireless network based on the WLAN information, and provides VLAN information associated with the wireless network to port information analyzer 372 to detect misconfiguration of the one or more VLANs of connected network devices.

For example, port information analyzer 372 may include a mismatch engine 374 configured to identify mismatching parameters from the port information of connected network devices. As one example, mismatch engine 374 may combine the port information of connected network devices and compare the combined port information of the connected network devices to determine whether there are mismatched parameters that may be indicative of a port misconfiguration. As one example, mismatch engine 374 may perform a cross join of tables including port information of connected network devices and identify differences in values of one or more parameters of the port information. An example configuration of mismatch engine 374 to identify differences in values of one or more parameters of the port information is shown below:

```
       differences = F.udf(lambda x, y: list(set(x) - set(y)),
       ArrayType(IntegerType()))
       mis_configured_df = df_interface_join.withColumn('diff_vlan_ids',
       differences('vlan_ids1', 'vlan_ids2')) \
            .filter((F.size('diff_vlan_ids') != 0) |
                    (F.col('mtu1') != F.col('mtu2')) |
                    (F.col('poe_status1') != F.col('poe_status2')) |
                    (F.col('mode1') != F.col('mode2')) |
                    (F.col('full_duplex1') != F.col('full_duplex2'))) \
            .select("org_id", "site_id", "sw1", "p1", "sw2", "p2",
                    "vlan_ids1", "vlan_ids2", "mtu1", "mtu2", "model", "mode2",
                "poe_status1", "poe_status2", "full_duplex1", "full_duplex2")
```

In this example, mismatch engine 374 determines whether there are any differences in values of the VLAN identifiers, MTU, PoE status, mode, and/or duplex configuration of connected network devices. For example, mismatch engine 374 may determine whether there is a difference in VLAN identifiers of the connected network devices (e.g., vlan_ids1 and vlan_ids2), and based on determining that the VLAN identifiers of the connected network devices are different, mismatch engine 374 determines that there is a port misconfiguration of the connected network devices. Alternatively, or additionally, mismatch engine 374 may determine whether there is a difference in MTU of the connected network devices (e.g., mtu1 and mtu2), and based on determining that the MTU values of the connected network device are different, mismatch engine 374 determines that there is a port misconfiguration of the connected network devices. Alternatively, or additionally, mismatch engine 374 may determine whether there is a difference in power over Ethernet (PoE) status of the connected network devices (e.g., poe_status1 and poe_status2), and based on determining that the PoE status of the connected network device are different, mismatch engine 374 determines that there is a port misconfiguration of the connected network devices. Alternatively, or additionally, mismatch engine 374 may determine whether there is a difference in modes of the connected network devices (e.g., mode1 and mode2), and based on determining that the modes of the connected network device are different, mismatch engine 374 determines that there is a port misconfiguration of the connected network devices. Alternatively, or additionally, mismatch engine 374 may determine whether there is a difference in duplex configuration of the connected network devices (e.g., full_duplex1 and full_duplex2), and based on determining that the modes of the connected network device are different, mismatch engine 374 determines that there is a port misconfiguration of the connected network devices.

In some examples, mismatch engine 374 may determine whether the differences in values of one or more parameters is appropriate based on a particular hierarchical relationship between the connected network devices, such as whether the mismatched parameters are appropriate for connected network devices having a parent-child relationship. As one example, mismatch engine 374 may determine whether there is a mismatch in the number of VLAN identifiers for each of the connected network devices. In response to determining that there is a mismatch in the number of VLAN identifiers for each of the connected network devices, mismatch engine 374 may determine, in some examples, a hierarchical relationship between the connected network devices (e.g., based on LLDP information obtained from the connected network devices). In a hierarchical relationship where the connected network devices include a parent network device and a child network device, mismatch engine 374 may determine whether the number of VLAN identifiers of the child network device is greater than the number of VLAN identifiers of the parent network device. If the number of VLAN identifiers of a child network device is greater than the number of VLAN identifiers of a parent network device, mismatch engine 374 may determine that the mismatch in the number of VLAN identifiers of the connected network devices is indicative of a port misconfiguration.

In some examples, mismatch engine 374 may be configured to determine port misconfigurations using port information stored in a graph database (e.g., arangoDB). In these examples, edge nodes of the graph may store port information of the parent-child hierarchy. For example, the graph database may include additional fields that store a source VLAN identifier (e.g., source_vlan_ids) and a target VLAN identifier (e.g., target_vlan_ids), a source MTU (e.g., source_MTU) and target MTU (e.g., target_mtu), a source mode (e.g., source_mode) and a target mode (e.g., target_mode), a duplex configuration of a source (e.g., source_full_duplex) and of a target (e.g., target_full_duplex), a power status of a source (e.g., source_poe_status) and of a target (e.g., target_poe_status). In these examples, mismatch engine 374 may compare the port information stored in the edge nodes of the graph (e.g., combine port information stored in the edge nodes of the graph) to determine whether there are mismatching parameters that may be indicative of port misconfigurations.

Based on the determination by mismatch engine 374 that there is a port misconfiguration, action module 390 of port misconfiguration engine 352 may perform an action, such as to generate a notification (e.g., an event) of the detected port misconfiguration. For example, action module 390 may include a notification engine 392 configured to generate and send a notification including, for example, the one or more parameters associated with the port misconfiguration and/or a reason for the port misconfiguration (e.g., specifying the missing VLAN identifiers, and/or other mismatched parameters, etc.). An example configuration of notification engine 392 of action module 390 to generate a notification of the detected port misconfiguration is shown below:

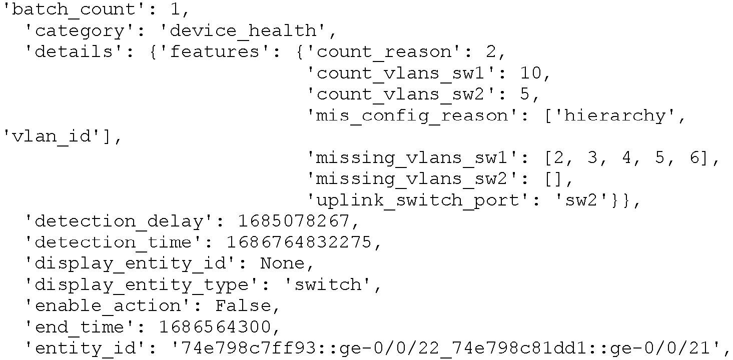

In this example, notification engine 392 of action module 390 may generate a notification specifying an overall health of the network device and/or details of the detected port misconfiguration, such as a reason of the port misconfiguration (e.g., mismatch in number of VLANs) and the one or more parameters contributing to the port misconfiguration (e.g., missing VLANs of the network device).

Action module 390 may include an automatic correction engine 394 that may automatically perform a remedial action, such as to restart a switch or AP determined to have a port misconfiguration, invoking downloading of new software to the switch or AP, adding a missing VLAN, removing an unnecessary VLAN, reconfiguring a VLAN, or other action correct the port misconfiguration.

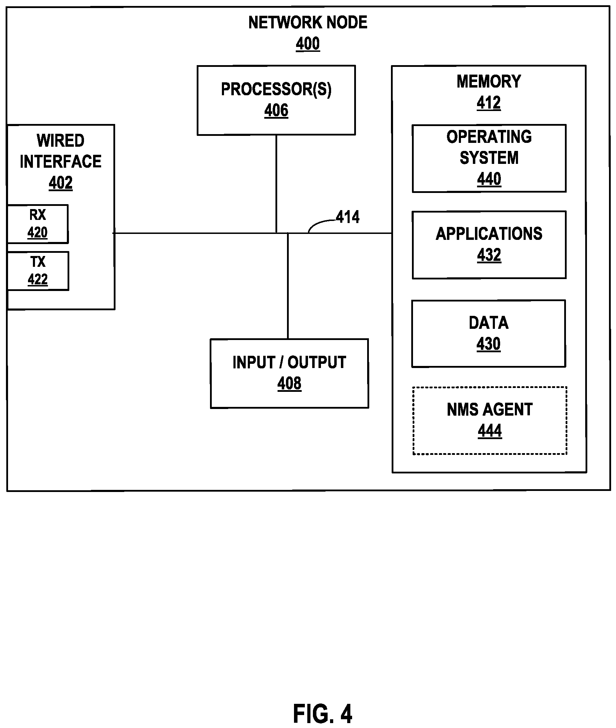

FIG. 4 is a block diagram illustrating an example network node 400, in accordance with one or more techniques of this disclosure. In one or more examples, the network node 400 represent one of switches 146, but may represent any other device in wired network 175 or SD-WAN 177 of FIG. 1B, e.g., routers 187.

In this example, network node 400 includes a wired interface 402, e.g., an Ethernet interface, a processor 406, input/output 408, e.g., display, buttons, keyboard, keypad, touch screen, mouse, etc., and a memory 412 coupled together via a bus 414 over which the various elements may interchange data and information. Wired interface 402 couples the network node 400 to a network, such as an enterprise network. Wired interface 402 may couple network node 400 to another network node (e.g., switch) or to an access point (e.g., AP device 200 of FIG. 2). Though only one interface is shown by way of example, network nodes may have multiple communication interfaces and/or multiple communication interface ports. Wired interface 402 includes a receiver 420 and a transmitter 422.

Memory 412 stores executable software applications 432, operating system 440 and data/information 430. Data 430 may include a system log and/or an error log that stores event data, including behavior data, for network node 400. In examples where network node 400 comprises a "third-party" network device, the same entity does not own or have access to both the APs or wired client-side devices and network node 400. As such, in the example where network node 400 is a third-party network device, NMS 130 does not receive, collect, or otherwise have access to the network data from network node 400.

In examples where network node 400 comprises a wired network device, network node 400 may be connected via wired interface 402 to one or more APs or other wired client-side devices, e.g., IoT devices, and/or to other network nodes. For example, network node 400 may include multiple wired interfaces 402 and/or wired interface 402 may include multiple physical ports to connect to multiple APs or the other network nodes within a site via respective Ethernet cables. In some examples, each of the APs or other wired client-side devices connected to network node 400 may access the wired network via wired interface 402 of network node 400. In some examples, one or more of the APs or other wired client-side devices connected to network node 400 may each draw power from network node 400 via the respective Ethernet cable and a Power over Ethernet (PoE) port of wired interface 402.

In examples where network node 400 comprises a session-based router that employs a stateful, session-based routing scheme, network node 400 may be configured to independently perform path selection and traffic engineering. The use of session-based routing may enable network node 400 to eschew the use of a centralized controller, such as an SDN controller, to perform path selection and traffic engineering, and eschew the use of tunnels. In some examples, network node 400 may implement session-based routing as Secure Vector Routing (SVR), provided by Juniper Networks, Inc. In the case where network node 400 comprises a session-based router operating as a network gateway for a site of an enterprise network (e.g., router 187A of FIG. 1B), network node 400 may establish multiple peer paths (e.g., logical path 189 of FIG. 1B) over an underlying physical WAN (e.g., SD-WAN 177 of FIG. 1B) with one or more other session-based routers operating as network gateways for other sites of the enterprise network (e.g., router 187B of FIG. 1B). Network node 400, operating as a session-based router, may collect data at a peer path level, and report the peer path data to NMS 130.

In examples where network node 400 comprises a packet-based router, network node 400 may employ a packet- or flow-based routing scheme to forward packets according to defined network paths, e.g., established by a centralized controller that performs path selection and traffic engineering. In the case where network node 400 comprises a packet-based router operating as a network gateway for a site of an enterprise network (e.g., router 187A of FIG. 1B), network node 400 may establish multiple tunnels (e.g., logical path 189 of FIG. 1B) over an underlying physical WAN (e.g., SD-WAN 177 of FIG. 1B) with one or more other packet-based routers operating as network gateways for other sites of the enterprise network (e.g., router 187B of FIG. 1B). Network node 400, operating as a packet-based router, may collect data at a tunnel level, and the tunnel data may be retrieved by NMS 130 via an API or an open configuration protocol or the tunnel data may be reported to NMS 130 by NMS agent 444 or other module running on network node 400.

The data collected and reported by network node 400 may include periodically-reported data and event-driven data. In some examples, the data collected and reported by network node 400 may include port information of network node 400 and/or port information of a network device (e.g., AP device or another network node) connected to network node 400. For example, network node 400 and its neighboring devices may use LLDP, or other layer 2 neighbor discovery protocol, to advertise port information to directly connected peers. As described above, port information may include, for example, information specifying an organization, site, remote chassis, remote vendor, VLANs, MTU, mode, PoE status, duplex configuration, etc. associated with network node 400 and/or associated with network devices connected to network node 400.

In some examples, network node 400 optionally includes an NMS agent 444. NMS agent 444 may periodically create a package of the data according to a periodic interval (e.g., minutes, hours, days, etc.). The collected data that is periodically-reported in the package of the data may be referred to herein as "oc-stats." In some examples, the package of data may also include details about clients connected to network node 400 and the associated client sessions. In some examples, the package of data may also include details about other network nodes connected to network node 400.

An example of the schema of the port information sent by network node 400 is provided below:

```
                    1-- org_id: string (nullable = true)
                    1-- site_id: string (nullable = true)
                    1-- mac: string (nullable = true)
                    |-- name: string (nullable = true)
                    |-- remote_chassis_id: string (nullable = true)
                    |-- remote_port_id: string (nullable = true)
                    |-- remote_vendor: string (nullable = true)
                    |-- link: boolean (nullable = true)
                    1-- vlan_ids: array (nullable = true)
                    | |-- element: integer (containsNull = true)
                    |-- remote_vlan_id: integer (nullable = true)
                    1-- mbps: integer (nullable = true)
                    1-- mtu: integer (nullable = true)
                    1-- poe_status: boolean (nullable = true)
                    1-- mode: string (nullable = true)
                    1-- stp_state: string (nullable = true)
                    |-- full_duplex: boolean (nullable = true)
```

NMS agent 444 may then report the package of data to NMS 130 in the cloud. In other examples, NMS 130 may request, retrieve, or otherwise receive the package of data from network node 400 via an API, an open configuration protocol, or another of communication protocols. The package of data created by NMS agent 444 or another module of network node 400 may include a header identifying network node 400 and the port information of network node 400 and/or network devices connected to network node 400. In still other examples, NMS agent 444 reports event data to NMS 130 in the cloud in response to the occurrence of certain events at network node 400 as the events happen. The event-driven data may be referred to herein as "oc-events."

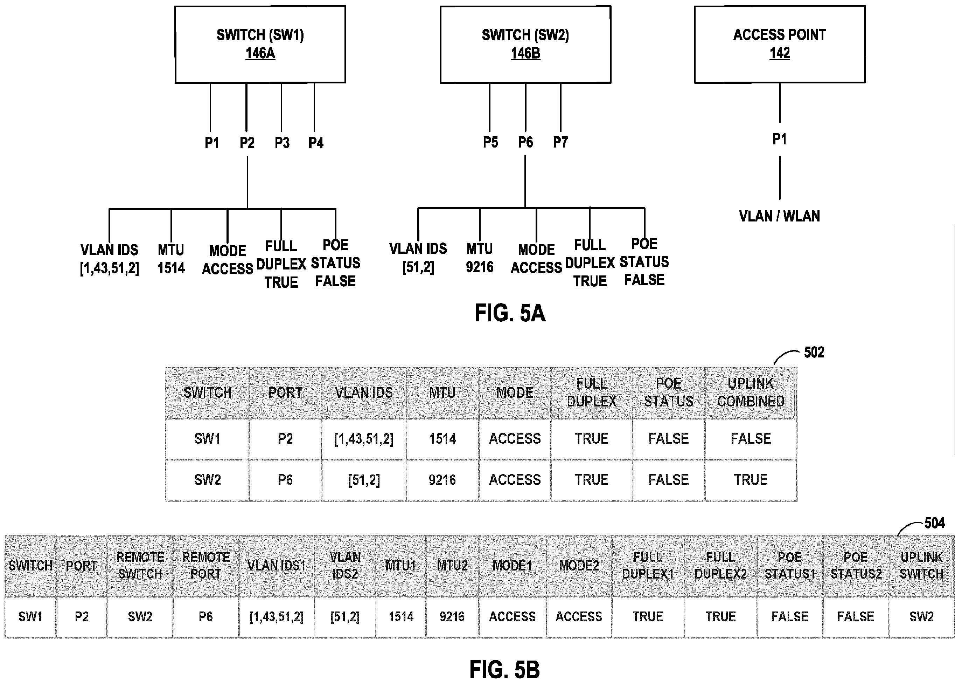

FIGS. 5A-5B illustrate an example operation of detecting port misconfiguration, in accordance with the techniques described in this disclosure. For ease of illustration, the example illustrated in FIGS. 5A-5B are described with respect to NMS 130 of FIGS. 1A-1B, and NMS 300 of FIGS. 3A-3B.

In the example of FIG. 5A, assume that port P2 of switch 146A (referred to herein as "first switch" or "SW1") is connected to port P6 of switch 146B (referred to herein as "second switch" or "SW2"). In this example, switch 146A may advertise port information associated with port P2 to switch 146B. Similarly, switch 146B may advertise port information associated with port P6 to switch 146A. NMS 130 may obtain port information from each of switches 146A and 146B, illustrated as port information 502 in FIG. 5B. In this example, port information 502 includes values specifying the port (e.g., P2) that connects the switch 146A to switch 146B (SW2), VLAN identifiers (e.g., [1,43,51,2]), MTU (e.g., 1514), mode (e.g., access), duplex configuration (e.g., full duplex set to true), power-over-Ethernet status (e.g., PoE status set to false), and connection hierarchy to switch 146B (e.g., uplink combined set to false to indicate switch 146A (SW1) is a parent switch to switch 146B (SW2)). Port information 502 also includes values specifying the port (e.g., P6) that connects switch 146B to switch 146A (SW1), VLAN identifiers (e.g., [51,2]), MTU (e.g., 9216), mode (e.g., access), duplex configuration (e.g., full duplex set to true), power-over-Ethernet status (e.g., PoE status set to false), and connection hierarchy to switch 146A (e.g., uplink combined set to true to indicate switch 146B (SW2) is a child switch to switch 146A (SW1)).

In this example, NMS 130 may determine, based on the port information of switch 146A and port information of switch 146B whether there are mismatched parameters that may be indicative of a port misconfiguration. As described above, NMS 130 (e.g., mismatch engine 374 of port misconfiguration detection engine 352) may combine (e.g., perform a cross-join) the port information of switch 146A and port information of switch 146B, as illustrated in combined port information 504 of FIG. 5B. NMS 130 may then compare the cross-joined port information 504 to determine whether there are mismatched parameters that may be indicative of a port misconfiguration, such as whether there is a mismatch to the VLAN identifiers (e.g., VLAN IDS1 and VLAN IDS2), MTUs (e.g., MTU1 and MTU2), modes (e.g., MODE1 and MODE2), duplex configurations (e.g., FULL DUPLEX1 and FULL DUPLEX2), and/or power-over-Ethernet status (e.g., POE STATUS 1 and POE STATUS2). In this example, NMS 130 may determine that the MTU of switch 146A does not match the MTU of switch 146B, which may be indicative of a port misconfiguration. Alternatively, or additionally, NMS 130 may determine that the VLAN identifiers of switch 146A does not match the VLAN identifiers of switch 146B. In this example, NMS 130 may determine the connection hierarchy (e.g., parent-child relationship) of the connected switches to determine whether the mismatch to the number of VLAN identifiers would be appropriate for the parent-child relationship between switch 146A and switch 146B. As one example, NMS 130 may determine, e.g., from the uplink_switch information, that switch 146A is a parent switch and switch 146B is a child switch. Based on a determined connection hierarchy of the connected switches, NMS 130 may further determine whether the mismatch to the number of VLAN identifiers of parent switch 146A is greater than the number of VLAN identifier of child switch 146B. In the example of FIG. 5B, NMS 130 determines that the number of VLAN identifiers child switch 146B (e.g., two) does not have a greater number of VLAN identifiers than parent switch 146A (e.g., four), which may not be indicative of a port misconfiguration. Alternatively, if the number of VLAN identifiers of the child switch is greater than the number of VLAN identifiers of the parent switch (not shown in FIG. 5B), NMS 130 may determine that the mismatch of the number of VLAN identifiers is indicative of a port misconfiguration.

Based on a determination that there is a port misconfiguration for the connected network devices, NMS 130 (e.g., action module 390 of port misconfiguration detection engine 352) may perform an action, such as to generate a notification (e.g., an event) of the detected port misconfiguration. For example, the notification may indicate a detected port misconfiguration and/or a reason for the port misconfiguration (e.g., mismatch of VLAN identifiers of network devices having a parent-child relationship, etc.). In some examples, NMS 130 may automatically perform a remedial action, such as to restart a switch or AP determined to have a port misconfiguration, invoke downloading of new software to the at least one of the connected network devices, add a missing VLAN, remove an unnecessary VLAN, reconfigure a VLAN (e.g., or provide a notification to reconfigure a VLAN based on a template configuration), or other action to correct the port misconfiguration.

While the examples described above are described with respect to a switch-to-switch connection, the techniques of the disclosure may alternatively, or additionally, apply to a switch-to-gateway connection. In this example, NMS 130 may obtain similar port information as described above, such as values specifying the port that connects the switch to the gateway, VLAN identifiers, MTU, mode, duplex configuration, power-over-Ethernet status, etc. NMS 130 may determine, based on the port information of the switch and port information of the gateway whether there are mismatched parameters that may be indicative of a port misconfiguration, and may perform an action based on a determination that there is a port misconfiguration for the connected network devices.

In some examples, NMS 130 may determine port misconfiguration for a switch-to-access point connection. In this example, assume that port P7 of switch 146B is connected to port P1 of access point 142. In this example, the port information includes values specifying the port (e.g., P6) that connects the switch 146B to access point 142, such as VLAN identifiers (not shown in FIG. 5A) associated with a wireless network that one or more client devices may access via access point 142.

In this example, NMS 130 may determine, based on the port information of switch 146B and port information of access point 142 whether there is a misconfiguration of one or more VLANs associated with the ports connecting switch 146B and access point 142. For example, NMS 130 may obtain WLAN information (e.g., SSID) identifying a wireless network that one or more client devices may access via access point 142. NMS 130 may also obtain port information of switch 146B and port information of access point 142, such as VLAN identifiers (not shown). NMS 130 may use the WLAN information to perform a lookup of database 318 that stores a mapping of SSID of wireless networks and VLAN identifiers to determine one or more VLANs that are associated with (e.g., mapped to) the WLAN information. NMS 130 may then determine whether there is a mismatch to the VLAN identifiers, missing VLAN identifiers, or any other issue to the VLANs that are associated with the wireless network, and may perform an action to remedy the port misconfiguration.

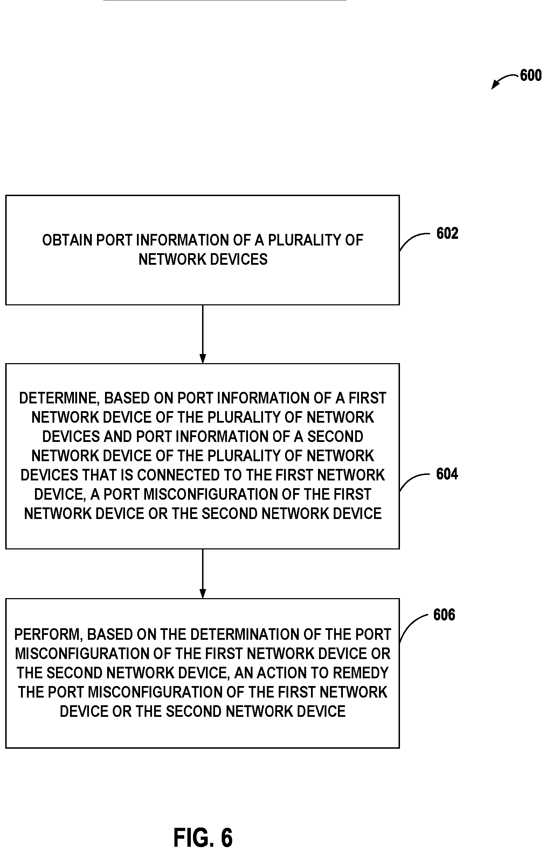

FIG. 6 is a flowchart illustrating an example operation of detecting port misconfigurations, in accordance with one or more techniques of this disclosure. FIG. 6 is described with respect to NMS 130 of FIGS. 1A and 1B, and port misconfiguration detection engine 352 of NMS 300 of FIGS. 3A and 3B.

Switch port configuration detection engine 352 of NMS 300 obtains port information of a plurality of network devices (602). For example, NMS 300 may obtain port information of connected network devices including, for example, organization, site, remote chassis, remote vendor, VLANs, MTU, mode, PoE status, and duplex configuration, etc.

Switch port configuration detection engine 352 of NMS 300 determines, based on port information of a first network device of the plurality of network devices and port information of a second network device of the plurality of network devices that is connected to the first network device, a port misconfiguration of the first network device or the second network device (604). For example, switch port configuration detection engine 352 of NMS 300 may include a mismatch engine 374 configured to identify mismatching parameters from the port information of connected network devices. As one example, mismatch engine 374 may perform a cross join of the port information of the first network device (SW1) and the second network device (SW2), as illustrated in FIGS. 5A-5B as cross-joined port information 504, and compare the port information of the first network device (SW1) and the second network device (SW2) to determine whether there are mismatched parameters that may be indicative of port misconfigurations. In some examples, mismatch engine 374 may compare port information of network devices that are connected based on the information specified in uplink_combined, which may be indicative of a parent-child connection between switches or between a switch and an AP device. As one example, mismatch engine 374 may determine whether there is a mismatch of the one or more parameters, such as a mismatch to the VLAN identifiers and/or number of VLAN identifiers (e.g., VLAN IDS1 and VLAN IDS2), MTUs (e.g., MTU1 and MTU2), modes (e.g., MODE1 and MODE2), duplex configurations (e.g., FULL DUPLEX1 and FULL DUPLEX2), power-over-Ethernet status (e.g., POE STATUS 1 and POE STATUS2), etc.

In some examples, mismatch engine 374 may further determine, based on a determined connection hierarchy of the connected network devices (e.g., determined from the uplink_switch information) where the first network device (e.g., SW1) is a parent network device and the second network device (e.g., SW2) is a child network device, whether the mismatch to the number of VLAN identifiers would be appropriate for the parent-child relationship between the first network device and the second network device. For example, a child network device with a greater number of VLAN identifiers than a parent network device may be indicative of a port misconfiguration.

In some examples, mismatch engine 374 may alternatively, or additionally, identify a misconfigured VLAN associated with a wireless network that one or more client devices may access via an access point. In this example, NMS 300 may obtain WLAN information (e.g., SSID) identifying the wireless network. NMS 300 may determine, based on the WLAN information, one or more VLANs associated with the wireless network. Mismatch engine 374 may then determine whether there is a misconfiguration to a port of the access point or a port of the switch configured for the one or more VLANs associated with the wireless network.

Based on the determination of the port misconfiguration of the first network device or the second network device, port configuration detection engine 352 of NMS 300 may perform an action to remedy the detected port misconfiguration, such as to provide a notification of the port misconfiguration or automatically perform a corrective action (606). For example, port configuration detection engine 352 of NMS 300 may include a notification engine 392 configured to generate and send a notification including, for example, the one or more parameters associated with the port misconfiguration and/or a reason for the port misconfiguration. In some examples, port configuration detection engine 352 of NMS 300 may automatically perform a remedial action based on determining that there is a port misconfiguration of the first network device or the second network device, such as to restart a switch determined to have a port misconfiguration, invoke downloading of new software to the switch or AP, add a missing VLAN, remove an unnecessary VLAN, reconfigure a VLAN, or other action to remedy the port misconfiguration.

Thus, from one perspective, there have now been described techniques for determining port misconfiguration between network devices. For example, a network management system comprises a memory and one or more processors in communication with the memory and configured to: obtain information associated with one or more ports of a plurality of network devices; determine, based on information associated with a port of a first network device of the plurality of network devices and information associated with a port of a second network device of the plurality of network devices that is connected to the port of the first network device, whether there is a port misconfiguration of the first network device or the second network device; and perform, based on the determination that there is a port misconfiguration of the first network device or the second network device, an action to remedy the port misconfiguration of the first network device or the second network device.

The techniques described in this disclosure may be implemented, at least in part, in hardware, software, firmware or any combination thereof. For example, various aspects of the described techniques may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit comprising hardware may also perform one or more of the techniques of this disclosure.

Such hardware, software, and firmware may be implemented within the same device or within separate devices to support the various operations and functions described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware or software components, or integrated within common or separate hardware or software components.

The techniques described in this disclosure may also be embodied or encoded in a computer-readable medium, such as a computer-readable storage medium, containing instructions. Instructions embedded or encoded in a computer-readable storage medium may cause a programmable processor, or other processor, to perform the method, e.g., when the instructions are executed. Computer readable storage media may include random access memory (RAM), read only memory (ROM), programmable read only memory (PROM), erasable programmable read only memory (EPROM), electronically erasable programmable read only memory (EEPROM), flash memory, a hard disk, a CD-ROM, a floppy disk, a cassette, magnetic media, optical media, or other computer readable media. Additionally, or alternatively, a computer-readable medium can include transient media such as carrier waves and transmission media.

Further examples of feature combinations taught by the present disclosure are set out in the following numbered clauses:
1. A network management system comprising:
   memory; and
   one or more processors in communication with the memory and configured to:
      obtain information associated with one or more ports of a plurality of network devices;
      determine, based on information associated with a port of a first network device of the plurality of network devices and information associated with a port of a second network device of the plurality of network devices that is connected to the port of the first network device, whether there is a port misconfiguration of the first network device or the second network device; and
      perform, based on the determination that there is a port misconfiguration of the first network device or the second network device, an action to remedy the port misconfiguration of the first network device or the second network device.
2. The network management system of clause 1, wherein to determine the port misconfiguration of the first network device or the second network device, the one or more processors are configured to:
   combine the information associated with the port of the first network device and the information associated with the port of the second network device; and
   determine a mismatch of one or more parameters of the combined information associated with the port of the first network device and the information associated with the port of the second network device.
3. The network management system of clause 2, wherein to determine the mismatch of one or more parameters of the combined information associated with the port of the first network device and the information associated with the port of the second network device, the one or more processors are configured to:
   determine the mismatch of one or more parameters based on a connection hierarchy of the first network device and the second network device.
4. The network management system of clause 2 or clause 3, wherein to determine the mismatch of one or more parameters, the one or more processors are configured to determine whether there is a mismatch to one or more virtual local area network (VLAN) identifiers of the port of the first network device and one or more VLAN identifiers of the port of the second network device.
5. The network management system of claim 4, wherein to determine whether there is a mismatch to one or more VLAN identifiers of the port of the first network device and one or more VLAN identifiers of the port of the second network device, the one or more processors are configured to:
   determine whether a number of the one or more VLAN identifiers of the port of the first network device is greater than a number of the one or more VLAN identifiers of the port of the second network device, wherein the first network device is a child network device and the second network device is a parent network device; and
   determine, based on determining that the number of the one or more VLAN identifiers of the port of the first device is greater than the number of the one or more VLAN identifiers of the port of the second network device, that there is a port misconfiguration of the first network device or the second network device.
6. The network management system of any of clauses 2 to 5, wherein to determine the mismatch of one or more parameters, the one or more processors are configured to determine whether there is a mismatch to a maximum transmission unit (MTU) of the port of the first network device and an MTU of the port of the second network device.
7. The network management system of any of clauses 2 to 6, wherein to determine the mismatch of one or more parameters, the one or more processors are configured to determine whether there is a mismatch to a mode of the port of the first network device and a mode of the port of the second network device.
8. The network management system of any of clauses 2 to 7, wherein to determine the mismatch of one or more parameters, the one or more processors are configured to determine whether there is a mismatch to a duplex configuration of the port of the first network device and a duplex configuration of the port of a second network device.
9. The network management system of any of clauses 2 to 8, wherein to determine the mismatch of one or more parameters, the one or more processors are configured to determine whether there is a mismatch to a power-over-Ethernet (PoE) status of the port of the first network device and a PoE status of the port of the second network device.
10. The network management system of any preceding clause,
   wherein the first network device comprises an access point,
   wherein the second network device comprises a switch, and
   wherein to determine the port misconfiguration of the first network device or the second network device, the one or more processors are configured to:
      obtain, from the access point, wireless local area network (WLAN) information identifying a wireless network that one or more client devices access through the access point;
      determine, based on the WLAN information, one or more virtual local area networks (VLANs) associated with the wireless network; and
      determine whether there is a misconfiguration to a port of the access point or a port of the switch configured for the one or more VLANs associated with the wireless network.
11. A method comprising:
   obtaining, by a network management system, information associated with one or more ports of a plurality of network devices;
   determining, by the network management system and based on information associated with a port of a first network device of the plurality of network devices and information associated with a port of a second network device of the plurality of network devices that is connected to the port of the first network device, whether there is a port misconfiguration of the first network device or the second network device; and
   performing, by the network management system and based on the determination that there is a port misconfiguration of the first network device or the second network device, an action to remedy the port misconfiguration of the first network device or the second network device.
12. The method of clause 11, wherein determining the port misconfiguration of the first network device or the second network device comprises:
   combining the information associated with the port of the first network device and the information associated with the port of the second network device; and
   determining a mismatch of one or more parameters of the combined information associated with the port of the first network device and the information associated with the port of the second network device.
13. The method of clause 12, wherein determining the mismatch of one or more parameters of the combined information associated with the port of the first network device and the information associated with the port of the second network device comprises:
   determining the mismatch of one or more parameters based on a connection hierarchy of the first network device and the second network device.
14. The method of clause 12 or clause 13, wherein determining the mismatch of one or more parameters comprises determining whether there is a mismatch to one or more VLAN identifiers of the port of the first network device and one or more VLAN identifiers of the port of the second network device.
15. The method of clause 14, wherein determining whether there is a mismatch to one or more VLAN identifiers of the port of the first network device and one or more VLAN identifiers of the port of the second network device comprises:
   determining whether a number of the one or more VLAN identifiers of the port of the first network device is greater than a number of the one or more VLAN identifiers of the port of the second network device, wherein the first network device is a child network device and the second network device is a parent network device; and
   determining, based on determining that the number of the one or more VLAN identifiers of the port of the first device is greater than the number of the one or more VLAN identifiers of the port of the second network device, that there is a port misconfiguration of the first network device or the second network device.
16. The method of any of clauses 12 to 15, wherein determining the mismatch of one or more parameters comprises determining whether there is a mismatch to a maximum transmission unit (MTU) of the port of the first network device and an MTU of the port of the second network device.
17. The method of any of clauses 12 to 16, wherein determining the mismatch of one or more parameters comprises determining whether there is a mismatch to a mode of the port of the first network device and a mode of the port of the second network device.
18. The method of any of clauses 12 to 17, wherein determining the mismatch of one or more parameters comprises determining whether there is a mismatch to a duplex configuration of the port of the first network device and a duplex configuration of the port of a second network device.
19. The method of any of clauses 12 to 18, wherein determining the mismatch of one or more parameters comprises determining whether there is a mismatch to a power-over-Ethernet (PoE) status of the port of the first network device and a PoE status of the port of the second network device.
20. Computer-readable media encoding instructions that, when executed by processing circuitry, cause the processing circuitry to:
   obtain information associated with one or more ports of a plurality of network devices;
   determine, based on information associated with a port of a first network device of the plurality of network devices and information associated with a port of a second network device of the plurality of network devices that is connected to the port of the first network device, whether there is a port misconfiguration of the first network device or the second network device; and
   perform, based on the determination that there is a port misconfiguration of the first network device or the second network device, an action to remedy the port misconfiguration of the first network device or the second network device.

## Claims

1. A network management system comprising:
memory; and
one or more processors in communication with the memory and configured to:
obtain information associated with one or more ports of a plurality of network devices;
determine, based on information associated with a port of a first network device of the plurality of network devices and information associated with a port of a second network device of the plurality of network devices that is connected to the port of the first network device, whether there is a port misconfiguration of the first network device or the second network device; and
perform, based on the determination that there is a port misconfiguration of the first network device or the second network device, an action to remedy the port misconfiguration of the first network device or the second network device.

2. The network management system of claim 1, wherein to determine the port misconfiguration of the first network device or the second network device, the one or more processors are configured to:
combine the information associated with the port of the first network device and the information associated with the port of the second network device; and
determine a mismatch of one or more parameters of the combined information associated with the port of the first network device and the information associated with the port of the second network device.

3. The network management system of claim 2, wherein to determine the mismatch of one or more parameters of the combined information associated with the port of the first network device and the information associated with the port of the second network device, the one or more processors are configured to:
determine the mismatch of one or more parameters based on a connection hierarchy of the first network device and the second network device.

4. The network management system of any of claims 2-3, wherein to determine the mismatch of one or more parameters, the one or more processors are configured to determine whether there is a mismatch to one or more virtual local area network, VLAN, identifiers of the port of the first network device and one or more VLAN identifiers of the port of the second network device.

5. The network management system of claim 4, wherein to determine whether there is a mismatch to one or more VLAN identifiers of the port of the first network device and one or more VLAN identifiers of the port of the second network device, the one or more processors are configured to:
determine whether a number of the one or more VLAN identifiers of the port of the first network device is greater than a number of the one or more VLAN identifiers of the port of the second network device, wherein the first network device is a child network device and the second network device is a parent network device; and
determine, based on determining that the number of the one or more VLAN identifiers of the port of the first device is greater than the number of the one or more VLAN identifiers of the port of the second network device, that there is a port misconfiguration of the first network device or the second network device.

6. The network management system of any of claims 2-5, wherein to determine the mismatch of one or more parameters, the one or more processors are configured to determine whether there is a mismatch to a maximum transmission unit, MTU, of the port of the first network device and an MTU of the port of the second network device.

7. The network management system of any of claims 2-6, wherein to determine the mismatch of one or more parameters, the one or more processors are configured to determine whether there is a mismatch to a mode of the port of the first network device and a mode of the port of the second network device.

8. The network management system of any of claims 2-7, wherein to determine the mismatch of one or more parameters, the one or more processors are configured to determine whether there is a mismatch to a duplex configuration of the port of the first network device and a duplex configuration of the port of a second network device.

9. The network management system of any of claims 2-8, wherein to determine the mismatch of one or more parameters, the one or more processors are configured to determine whether there is a mismatch to a power-over-Ethernet, PoE, status of the port of the first network device and a PoE status of the port of the second network device.

10. The network management system of any preceding claim,
wherein the first network device comprises an access point,
wherein the second network device comprises a switch, and
wherein to determine the port misconfiguration of the first network device or the second network device, the one or more processors are configured to:
obtain, from the access point, wireless local area network, WLAN, information identifying a wireless network that one or more client devices access through the access point;
determine, based on the WLAN information, one or more virtual local area networks, VLANs, associated with the wireless network; and
determine whether there is a misconfiguration to a port of the access point or a port of the switch configured for the one or more VLANs associated with the wireless network.

11. A method comprising:
obtaining, by a network management system, information associated with one or more ports of a plurality of network devices;
determining, by the network management system and based on information associated with a port of a first network device of the plurality of network devices and information associated with a port of a second network device of the plurality of network devices that is connected to the port of the first network device, whether there is a port misconfiguration of the first network device or the second network device; and
performing, by the network management system and based on the determination that there is a port misconfiguration of the first network device or the second network device, an action to remedy the port misconfiguration of the first network device or the second network device.

12. The method of claim 11, further comprising steps corresponding to the functionality of any of claims 2-10.

13. A computer-readable storage medium comprising instructions that when executed by one or more processors, cause the one or more processors to perform the method recited by any of claims 11-12.
